# EUROPEAN PATENT SPECIFICATION

(11) **EP 3 386 674 B1**
(45) Date of publication and mention of the grant of the patent: **25.03.2026**
(21) Application number: 16816835.9
(22) Date of filing: 07.12.2016
(51) Int. Cl.: B23K 26/00, A43D 8/00, B23K 26/04, B23K 26/08, B23K 26/402, B29D 35/00, B44C 1/22, B23K 26/364, B23K 26/142, B23K 26/082, B23K 26/352

(54) **LASER SIPING APPARATUS AND METHOD FOR FOOTWEAR**
VORRICHTUNG UND VERFAHREN ZUM LASERBEARBEITEN VON SCHUHWERK
APPAREIL ET PROCÉDÉ DE TRAITEMENT LASER POUR CHAUSSURES

(30) Priority: 07.12.2015 US 201562264137 P; 06.12.2016 US 201615370882
(43) Date of publication of application: 17.10.2018
(73) Proprietor: Nike Innovate C.V., Beaverton, OR 97005-6453 (US)
(72) Inventor: BLANCHARD, Philippe, Beaverton Oregon 97005-6453 (US); CHON, Yong Joo, Jung-gu Seoul 1005-855 (KR)
(74) Representative: Müller-Boré & Partner Patentanwälte PartG mbB
(86) International application number: PCT/US2016/065349
(87) International publication number: WO 2017/100302

(56) References cited:
- WO-A1-2012/028348
- WO-A1-94/04968
- US-A- 5 990 444
- US-A1- 2005 262 739
- US-A1- 2012 260 437
- US-B2- 8 294 123

## Description

### TECHNICAL FIELD

Aspects provide methods and systems for forming a siping pattern on an article with a laser.

### BACKGROUND

Sipes are formed on surfaces of articles to increase traction, flexibility, and aesthetics. A sipe is a slit-like structure that causes a discontinuity in a surface of the article. A sipe may be integrally formed into an article during the formation of that article or it may be formed in a post-processes technique, such as using a cutting blade to form the sipe. The formation of a sipe with a cutting blade may require a craftsman that can introduce mistakes into the process and the resulting siping pattern.

WO 2012/028348 A1 describes a method for manufacturing at least one part of a sole assembly of a shoe comprising the steps of directing a laser beam towards the at least one part of the sole assembly, which comprises a polymer material, and creating at least one of an opening, passage, cavity or engraved pattern in the at least one part of the sole assembly by means of the laser beam, or removing material from the at least one part of the sole assembly by means of the laser beam.

WO 94/04968 A1 describes a system for robotic control of an object having x, y and z axis translational movement and C and D axis rotational movement capability. The object, which may be a robotic element such as a manipulator or machining tool or a laser beam positioner is controlled by the system for automatic tracking and orientation of the object over the surface of a workpiece. It provides controllable movement and orientation of the object along selectable axes for accurate tracking of the workpiece surface by the object.

US 2012/260437 A1 describes a method of preparing a shoe sole. The method of preparing a shoe sole includes irradiating an uncured rubber sheet by laser beam to pattern and vulcanize a portion of the uncured rubber, tailoring the partially patterned vulcanized rubber into a shoe shape, and afterward fully vulcanizing the partially patterned vulcanized rubber sheet to form a shoe sole. An additional step of assembling the upper panel of shoe sole on the partially vulcanized rubber sheet is also performed.

US 8 294 123 B2 describes a laser processing method and the like having a structure for making it possible to process an object to be processed in various ways while accurately adjusting the installation state of the object. The method irradiates the object with plural adjustment laser light beams that are set in a specific positional relationship against a converging point of processing laser light beam, and adjusts the state of installation of the object while monitoring irradiation areas of the adjustment laser light beams on the surface of the object.

US 5 990 444 A describes a laser method that relates to the identification and understanding of a new energy measurement called energy density per unit time, and the identification and simultaneous control of the laser operating parameters which influence this energy measurement. Once a range of energy density per unit time is determined for scribing a desired graphic on a given material, the energy density per unit time can be controlled to stay within that range to achieve desired results in a repeatable fashion. In a preferred embodiment, the material is one of a group of fabric, leather and vinyl materials. In this embodiment, the energy density per unit time can be controlled to substantially avoid complete carbonization, melting and/or burnthrough of the material.

US 2005/262739 A1 describes an article of footwear that includes an upper and a sole structure secured to the upper. The sole structure includes a connecting portion positioned adjacent the upper and extending along a longitudinal length of the upper. A plurality of discrete sole elements extend downward from the connecting portion. The sole elements define a lower surface, and the sole elements are separated by a plurality of sipes that extend upward from the lower surface and into the sole structure. An outsole may be located within the sipes and extend between the sole elements, with a lower portion of the outsole extending beyond the lower surface of the sole elements.

### SUMMARY

The claimed invention is defined by the independent claims. Additional embodiments are defined in the dependent claims.

### BRIEF DESCRIPTION OF THE DRAWING

The claimed invention is described in detail herein with reference to the attached drawing figures, wherein:
FIG. 1 depicts an exemplary laser siping apparatus, in accordance with aspects hereof;
FIG. 2 depicts an exemplary relative movement between a laser and a part holder, in accordance with aspects hereof;
FIG. 3 depicts another exemplary relative movement between the laser and the part holder, in accordance with aspects hereof;
FIG. 4 depicts the laser 104 in a simplified schematic, in accordance with aspects hereof;
FIG. 5 depicts a laser siping operation performed by the laser on a sole, in accordance with aspects hereof;
FIG. 6 depicts a cross section of the sole having a plurality of sipes formed therein with the laser operating in the scan laser configuration, in accordance with aspects hereof;
FIG. 7 depicts a cross section of the sole having a plurality of sipes formed therein with the laser operating in the fixed laser configuration, in accordance with aspects hereof;
FIG. 8 depicts a perspective view of the laser siping apparatus of FIG. 1 operating in a scan laser configuration, in accordance with aspects hereof;
FIG. 9 depicts a perspective view of the laser siping apparatus of FIG. 8 operating in a scan laser configuration, in accordance with aspects hereof;
FIG. 10 depicts a fixed laser configuration of the laser generating a sipe along the sole medial sidewall, in accordance with aspects hereof;
FIG. 11 depicts a fixed laser configuration of the laser generating a sipe along a sole medial sidewall, in accordance with aspects hereof;
FIG. 12 depicts a perspective view of the sole maintained by the part holder oriented relative to the laser to form a sipe on the exterior sidewall of the sole on the medial side with a fixed laser configuration, in accordance with aspects hereof;
FIG. 13 depicts the laser forming a sipe alongside the sipe using a fixed laser configuration, in accordance with aspects hereof; and
FIG. 14 depicts a block diagram representing a method of laser siping a sole structure for an article of footwear, in accordance with aspects hereof.

### DETAILED DESCRIPTION

Aspects hereof provide systems and methods for siping an article with both a scan laser configuration and a fixed laser configuration. Siping is the formation of a cut, slit, channel, or groove into a surface. Sipes, the structure formed from siping, do not traditionally extend completely through the article, but instead have limited depth of penetration. A sipe may have a limited width, such as a width less than 5 millimeters in an exemplary aspect and less than 2 millimeters in another aspect. Sipes may be used to form traction structures and/or aesthetic details in articles, such as sole structure, for footwear, in an exemplary aspect. For example, a collection of sipes may be formed in a ground-contacting surface of a shoe sole to provide traction to the sole. The collection of sipes may be configured such that a pattern is formed. The pattern of sipes may function collectively to form a traction-enhancing surface. Additionally, it is contemplated that one or more sipes may be formed on a sidewall of the sole structure. The sidewall sipes may provide aesthetic enhancement and/or varied compressibility and/or flexibility of the sole to facilitate an intended performance result.

When using a laser to form the sipes, a distance from the laser to the target article, such as a shoe sole, can affect a variety of characteristics of the resulting sipe. For example, the depth of the sipe, the width of the sipe, the temperature the target material experiences may be excessive or insufficient to generate a sipe, and the visual result may be affected, for example. The distance between the laser and the target article may depend on a focal length of the laser. If the intended sipe pattern extends outside of a workable distance range for the laser, the target material and/or the laser may physically move to maintain the distance within a defined distance range. As a result, depending on the sipe to be generated by a laser, a scan laser configuration or a fixed laser configuration may be implemented. Having the ability to implement both a scan and a fixed laser configuration from a common tool provide flexibility and efficiency in a manufacturing process.

A scan laser configuration generally maintains the target article and the relative location of the laser in a constant position while a reflective surface scans the laser energy across the target article. This scan laser configuration provides a relatively faster-per-distance sipe than a fixed laser configuration. However, because the distance from the laser to the target material changes when reflecting the laser energy to different points on the target article, the useable focal length range for the laser may be exceeded. Alternatively, for sipe patterns that are continuous and include points that exceed the acceptable focal length range, maintain the reflective surface of the laser and instead moving the laser relative to the target article as a fixed laser configuration may be implemented. A fixed laser configuration allows for a longer continuous sipe pattern, but it may be slower at forming a sipe-per-distance than the scan laser configuration. As such, depending on the sipe patterns and geometry of the target article, a scan laser configuration may be used to form a first sipe pattern and a fixed laser configuration may be used to form a second sipe pattern.

According to example not in accordance with the present invention, an apparatus to accomplish a multiple laser configuration siping process includes a laser. The laser comprising a laser energy emitter and a programmable moveable reflection surface between the laser energy emitter and an output port of the laser. The apparatus also includes a part holder that is programmably moveable, such as a multi-axis robot system. The apparatus also includes a computing device having a processor and memory that is coupled with the laser and the part holder. The computing device includes a non-transitory computer-readable media having instructions stored thereon for controlling the laser and the part holder. The instructions cause the positioning of the part holder in a first orientation relative to the laser. While maintaining the part holder in the first orientation, the instructions cause the reflection surface of the laser to move while the laser energy emitter emits laser energy, as in a scan laser configuration. The laser energy is directed to a plurality of points relative to the part holder maintained in the first orientation. For example, the part holder may be holding a shoe sole and the plurality of points are on a sipe pattern being formed. The instructions may also include positioning the part holder in a second orientation relative to the laser. While the part holder is in the second orientation, the instructions cause the reflective surface of the laser to be maintained in a stationary position. Additionally, while the reflective surface is maintained in the stationary position and the laser emitter emits laser energy, the instructions cause the part holder to transition from the second orientation to a third orientation relative to the laser. The laser energy is directed to a plurality of points on the part holder as the part holder moves from the second orientation to the third orientation, as an example of a fixed laser configuration for forming a sipe.

As will be discussed throughout, it is contemplated that aspect provided herein are also directed to a method of laser siping an article. According to example not in accordance with the present invention, the method includes position the article in a first orientation relative to a laser and emitting laser energy from a laser emitter of a laser toward the article. A computer-controlled moveable reflective surface reflects the laser energy from the laser emitter toward the article. The method also includes moving the reflective surface as the laser emitter emits laser energy such that a first predefined siping pattern is created on a first surface of the article by the movement of the reflective surface reflecting laser energy. The method continues with positioning the article in a second orientation relative to the laser and emitting laser energy from the laser emitter toward the article while maintaining the reflective surface in a fixed position. While the reflective surface is in a fixed position and the laser emitter emits laser energy, moving the article from the second orientation to a third orientation such that a second predefined siping pattern is created on a second surface of the article by the laser energy.

Another aspect not in accordance with the present invention contemplated includes a method of laser siping a sole structure for an article of footwear. The method includes positioning the sole structure in a first orientation relative to a laser. The first orientation exposes a major surface, such as a ground-contacting surface, of the sole structure to the laser. The method includes adjusting a distance between the sole structure and the laser to achieve a predefined focal distance between the laser and the sole structure major surface. Visual indicators may be displayed on the sole that provide a visual confirmation of an appropriate distance between the sole and the laser. The method includes emitting laser energy from a laser emitter of the laser toward the sole structure. A computer-controlled moveable reflective surface, such as a mirror, reflects the laser energy from the laser emitter toward the sole structure to form a sipe. The method also includes moving the reflective surface as the laser emitter emits laser energy such that a first predefined siping pattern is created on the major surface of the sole structure by the movement of the reflective surface reflecting laser energy. At a first location on the major surface, the first siping pattern is formed with the laser at a distance greater than the predefined focal length. For example, as an angle of reflection changes by the reflective surface, the laser energy travels farther than the focal distance. The distance traveled by the laser energy may be limited to within a defined range that is suitable for forming a sipe on the sole. The method continues with positioning the sole structure in a second orientation relative to the laser and emitting laser energy from the laser emitter towards the sole structure while maintaining the reflective surface in a fixed position. While the reflective surface is in a fixed positioning and the laser emitter emits laser energy, the method includes moving the sole structure from the second orientation to a third orientation such that a second predefined siping pattern is created on a minor surface, such as a sidewall, of the sole structure by the laser energy. In this fixed laser configuration, the predefined focal length between the component and the laser may be substantially maintained as the sole component moves from the second orientation to the third orientation.

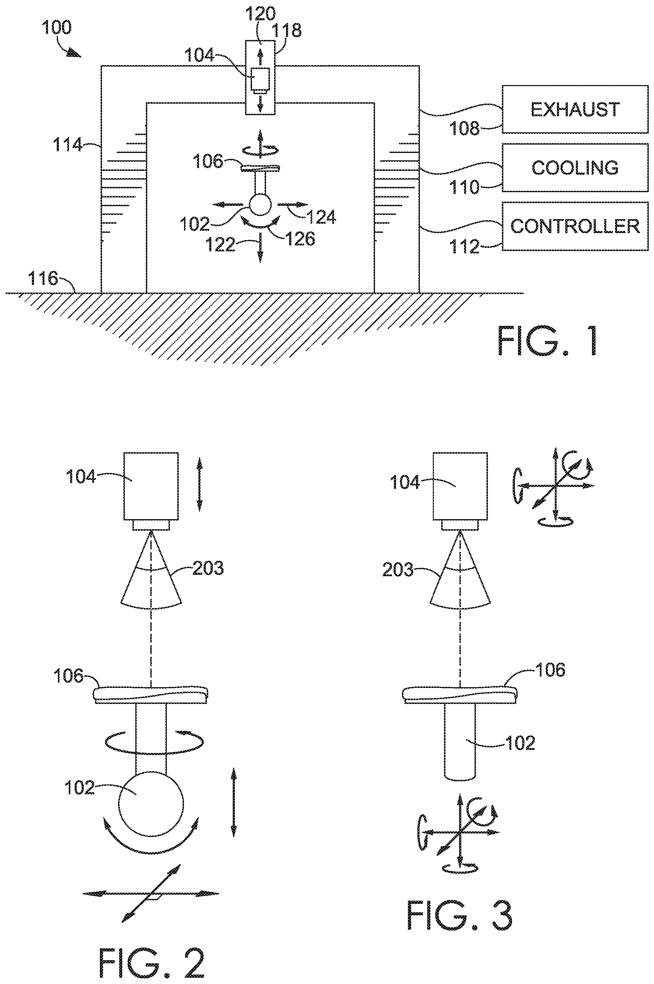

Referring now to FIG. 1, an exemplary laser siping apparatus 100 is depicted in accordance with aspects hereof. The laser siping apparatus 100 is comprised of a part holder 102, a laser 104, an exhaust system 108, a cooling system 110, a computing device as a controller 112, a support 114, a horizontal axis movement mechanism 118, and a vertical axis movement mechanism 120. It is understood that additional elements may be included in alternative aspects. Further, it is understood that one or more of the listed elements of the laser siping apparatus 100 may be omitted in alternative exemplary aspects. Further, the laser siping apparatus 100 is depicted for illustrative purposes and may have alternative configurations, shaping, sizing, and arrangements.

The part holder 102 holds a part, such as an article, for application of laser energy thereto. For example, the part holder 102 may maintain and position a shoe structure, such as a sole, relative to the laser 104. The part holder may include one or more movement mechanism, such as actuators, servos, motors, and the like. The movement mechanisms are effective to change an orientation of the part holder 102. For example, as depicted by directional arrows 122, 124, and 126, it is contemplated that the part holder may be a multidimensional moveable device, such as a 5-axis movement device. The part holder may therefore be effective to move an attached article in a Y axis (e.g., arrow 122), an X axis (e.g., arrow 124), a Z axis, and/or rotate about any of those axes (e.g., arrow 126 showing movement around the Z axis). The part holder may be physically coupled to the support 114 in an exemplary aspect to maintain a known relative location to the laser 104. Additionally and/or alternatively, the part holder 102 may be physically coupled with a base 116 (e.g., floor) or other structure not depicted. According to the invention, it is contemplate that a part holder is statically mounted and the scan laser configuration is effective to sipe on a surface without movement of the article and the fixed laser configuration is effective by movement of the laser to sipe a surface.

The part holder is depicted having an article 106 maintained thereon. For example, it is contemplated that tooling is configured on the part holder 102 to physically secure an article or selection of articles. In an exemplary aspect, the part holder 102 is configured to secure a shoe sole portion of varying size (e.g., shoe size 5, 7, 9, 11, 13, 15, etc.). Further, it is contemplated that the part holder is logically coupled with the controller 112. As will be discussed in greater detail hereinafter, the controller 112 may be effective to control the orientation of the part holder by altering one or more portions of an integral movement mechanism (e.g., motors, servos, actuators). As such, the controller 112 can coordinate the application of laser energy from the laser 104 with the movement of the part holder 102 to achieve a particular siping pattern on the article 106, in an example not in accordance with the present invention.

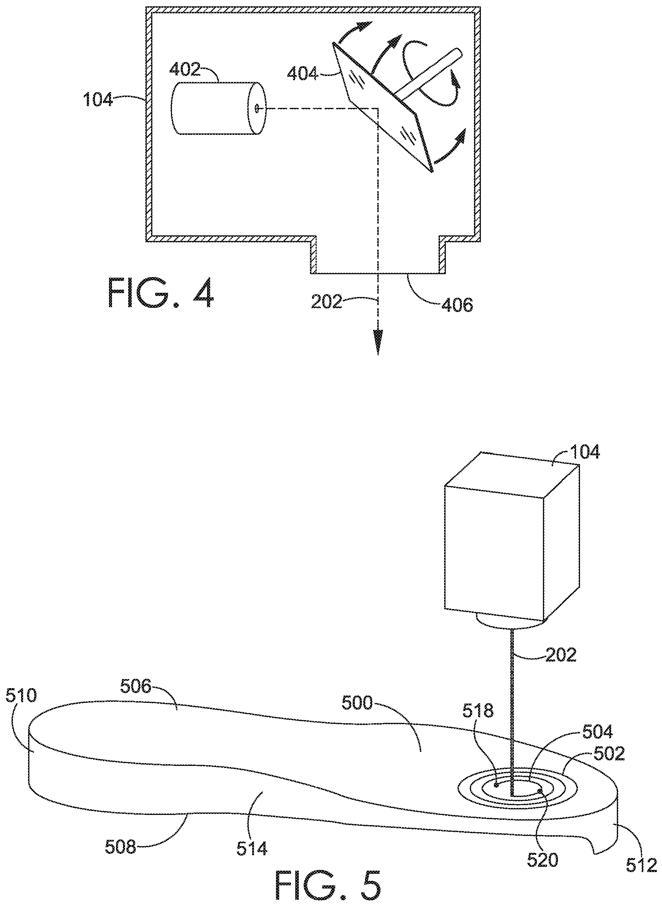

The laser 104 emits laser energy. In an exemplary aspect, the laser 104 is a carbon dioxide (CO2) laser. The laser 104 may emit a beam of infrared light energy. In an exemplary aspect, the laser energy may be emitted in a wavelength band between 9.4 and 10.6 micrometers, for example. Turning briefly to FIG. 4, the laser 104 is depicted as a simplified schematic, in accordance with aspects hereof. The laser 104 is comprised of a laser emitter 402. The laser emitter 402 is responsible for generating laser energy, such as laser beam 202 (e.g., laser energy beam). The laser beam 202 is projected from the laser emitter 402 to a reflective surface 404. The reflective surface is programmably moveable. For example, in response to one or more inputs (e.g., instructions), movement mechanisms (e.g., motors, servos, actuators, etc.) move the reflective surface 404. For example, the reflective surface 404 may tilt in any direction to alter a path taken by the laser beam 202. The moveable reflective surface 404, in an exemplary aspect, projects the laser beam 202 in a scan pattern to form a defined sipe pattern on an article while the article is maintained in a stationary position. Because the laser 104 as a whole and the part holder 102 (of FIG. 1) are maintained in a relatively constant orientation, the siping pattern may be formed faster than if the laser 104 and/or the part holder are moved to form the siping pattern. The laser beam 202 emerges from the laser 104 at an output port 406.

Returning to FIG. 1, it is contemplated that the laser 104 is logically coupled with the controller 112. For example, the controller may provide one or more instructions that cause the laser 104 to emit laser energy. Further, the controller may provide one or more instructions that cause the reflective surface 404 of FIG. 4 to move and reflect the laser energy in one or more locations. Stated differently, it is contemplated that the controller 112 can coordinate one or more actions of the laser 104 with one or more other components (e.g., part holder 102) to form a particular sipe pattern on the article 106, in an exemplary aspect.

The laser 104 is depicted as being moveably mounted to the support 114 by way of the horizontal movement mechanism 118 and the vertical movement mechanism 120. The horizontal movement mechanism 118 and the vertical movement mechanism 120 may be any type of movement mechanism, such as an actuator, motor, servo, or other mechanism effective to change an orientation of the laser 104. Alternatively, it is contemplated that the laser 104 is fixedly coupled in the system, such as to the support 114. The horizontal movement mechanism 118 and the vertical movement mechanism 120 are logically coupled with the controller 112 such that the controller 112 can provide one or more instructions to change any orientation of the laser 104 causing the horizontal movement mechanism 118 and the vertical movement mechanism 120 to move.

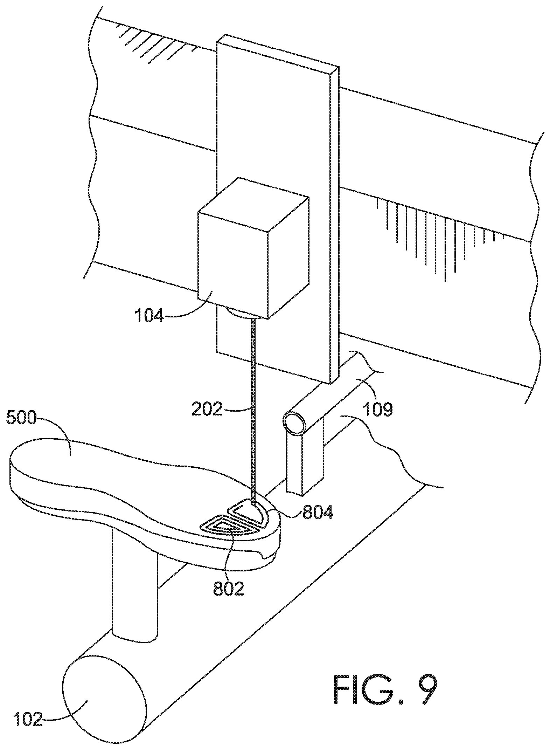

The exhaust 108 may be a negative pressure system. For example, the exhaust 108 may form a negative pressure that removes particulate from the environment. In an exemplary aspect, and as depicted in FIG. 9 hereinafter, the exhaust 108 may include an inlet 109 that is flexibly coupled with the part holder 102 to capture particulate in the region of the article 106. For example, as laser energy interacts with the article 106, fumes, dust, smoke, and other elements may be generated and dissipated into the environment from the process of forming a sipe. These particulate elements may interfere with the application of laser energy and the functioning of the apparatus as a whole. Therefore, the exhaust 108 may collect and remove the elements from the work space for the apparatus. The exhaust may be a filtered vacuum system in an exemplary aspect.

The cooling system 110 may be a laser chiller that is functionally coupled with the laser 104, in an exemplary aspect. The cooling system 110 may be effective to chill the laser 104 such that a defined power is achieved by the laser in a continuous manner.

The controller 112 is a computing device that has a processor and memory. The controller 112 may include a variety of computer-readable media. Computer-readable media can be any available media that can be accessed by controller 112 and includes both volatile and nonvolatile media, removable and non-removable media. By way of example, and not limitation, computer-readable media may comprise computer storage media and communication media. Computer storage media includes volatile and nonvolatile, removable and non-removable media implemented in any method or technology for storage of information such as computer-readable instructions, data structures, program modules, or other data.

Computer storage media includes non-transitory RAM, ROM, EEPROM, flash memory or other memory technology, CD-ROM, digital versatile disks (DVD) or other optical disk storage, magnetic cassettes, magnetic tape, magnetic disk storage, or other magnetic storage devices. Computer storage media does not comprise a propagated data signal.

Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above should also be included within the scope of computer-readable media.

The controller 112 may include computer-readable media having instruction embodied thereon that are effective to cause one or more elements of the system to perform one or more actions. For example, the instructions may cause a movement mechanism to move, a laser to emit laser energy, an exhaust to operate, and a cooling system to chill a laser, in an exemplary aspect. Each of these actions may be coordinated to achieve an environment suitable for both fixed laser configurations and scan laser configuration. The instructions may be coded as numerically controlled instructions or other types as is commonly known.

The support 114 is a stable structure that provides resistance to movement from vibrational and other forces. For example, in an industrial setting, other machines and components may be operating that provide vibrational forces that could affect the precision of laser emission output by the laser 104. Therefore, the support 114 may have sufficient mass to resist movement from environmental distractions. In an exemplary aspect, the support 114 is formed from a cast material (e.g., concrete, epoxy bonded minerals), solid materials (e.g., granite), and other exemplary materials (e.g., steel). The support 114 may be physically secured to the base 116 to further prevent movement, in an exemplary aspect.

The laser siping apparatus 100, as will be depicted in the following figures, is capable of laser siping an article in both a scan laser configuration and in a fixed laser configuration. The scan laser configuration may be implemented on relatively flat surfaces of the article 106 such that a distance between the laser and the point of contact by the laser energy with the article 106 is within a defined distance range. For example, for an exemplary configuration, it is contemplated that a laser siping pattern in which any two points (e.g., two points having the greatest distance between one another in the siping pattern) are less than 150 millimeters apart may be performed using a scan laser configuration. In this example, the laser beam may be centered over a midpoint between the two points. As such, the laser beam is extending across the surface of the article 75 millimeters in an exemplary example. If the focal length of the laser 104 relative to the surface of the article 106 is in a range of 200 to 400 millimeters in an exemplary aspect, the distance may be calculated using Pythagoras theorem, in an exemplary aspect. For example, the shortest length useable may be directly below the laser (e.g., 200 millimeters with the example above), the largest length is the angled distance from the laser to the edge of the siping pattern (e.g., 400 millimeters from the example above) and the result from the calculation could provide a travel distance across the article surface from the midpoint to the edge (e.g., total length from edge to edge with a centered laser could be calculated with the above exemplary ranges as: 400 = 2 * ((400²-200²)^½)). Alternative methods may also be used to calculate an acceptable greatest distance across the article surface with a known focal length and acceptable beam length range.

As distance increases between the laser 104 and the surface to be siped, the depth of sipe may reduce. Alternatively, as the distance between the laser and the surface to be siped decreases, the sipe depth may increase. As such, the scan laser configuration may cause varied sipe depths as the laser beam is reflected at different angles and therefore lengths. On a major surface, such as a foot contacting or a ground contacting surface of a shoe sole, the relative flat nature of the surface and consolidated siping patterns used may be suitable to implement a scan laser configuration.

As previously discussed, the scan laser configuration may provide a faster-per-distance sipe generation than a fixed laser configuration. This may be in part as a result of less mass being moved less of a distance during a given time. For example, the mass associated with a reflective surface may be significantly less than moving the part holder 102 having the article 106 and/or the laser 104 as a whole. Further, a reflection and rotation of the reflective surface may have less travel distance to achieve a given beam travel distance than moving the article and/or the laser 104 as a whole. Therefore, the laser scan configuration may be more effective for some applications of forming sipe patterns. Further, the scan laser configuration may be effective to form a plurality of discrete siping patterns on a common surface without requiring movement of the article itself. For example, if multiple discrete traction elements are to be formed, such as concentric circular lug-like elements, on the ground-contacting surface of a sole, a series of the discrete siping patterns may be formed with a scan laser configuration without repositioning the sole relative to the laser. Instead, the laser energy is directed to each of the discrete siping pattern locations by the reflective surface movement, in an example.

The fixed laser configuration contemplates the reflective surface (e.g., reflective surface 404 of FIG. 4) in a constant orientation (e.g., fixed position), such that the laser 104 functions as a laser having a fixed or direct beam. To achieve the sipe pattern in a fixed laser configuration, the article to be siped (e.g., article 106) is moved as a whole (not in accordance with the present invention) or in accordance with the present invention the laser 104 is moved as a whole (e.g., via movement mechanisms 118 and/or 120). The fixed laser configuration may be effective to form sip patterns that have longer continuous travel. For example, siping along a sidewall of a shoe sole may have a continuous sipe line that extends a greater distance that is within a predefined range (e.g., 150 millimeters). Further, the fixed laser configuration may be suitable for surface having varied surface structures (e.g., varied distances from the laser, such as curved surfaces) as the focal length may be maintained by adjusting a distance between the laser 104 and the article 106 as the siping is occurring. The distance may be adjusted by moving the part holder 102 and/or the laser 104. Therefore, it is contemplated that the fixed laser configuration may be useable for long sipes (e.g., medial or lateral sidewalls of a shoe sole) and for curved surfaces (e.g., heel end and toe end of a shoe sole). As a result, it is contemplated that a fixed laser configuration is appropriate for surfaces having more curvature (e.g., peaks and valleys) than for using the scan laser configuration. Stated differently, the scan laser configuration is appropriate for substantially non-curved (e.g., substantially planar) surfaces, such as a ground-contacting surface of a shoe sole while the fixed laser configuration is appropriate for surfaces (e.g., sole sidewalls, toe ends, and heel ends) having greater curvature than the substantially flat surfaces to which the scan laser is effective, in an exemplary aspect.

Further, it is contemplated that a hybrid laser configuration may be implemented in exemplary aspect. The hybrid laser configuration include both movement of the part holder 102 and/or laser 104 in conjunction with movement of the reflective surface 404 of FIG. 4. The hybrid approach may provide a compromise of increased sipe-distance per time while maintaining the laser beam distance within a defined length range, in an exemplary aspect.

As provided herein, it is contemplated that an article, once maintained by a part holder, may not be repositioned relative to the part holder to transition between the scan laser configuration and the fixed laser configuration or between discrete siping patterns. Instead, it is contemplated that the part holder and/or the laser are repositioned to effective sipe a variety of surfaces, locations, or patterns on the article. Therefore, a single laser siping system is effective to autonomously transition between a scan laser configuration and a fixed laser configuration for a common article. Stated differently, it is contemplated that an article, such as a footwear component, is loaded initially to a part holder and then multiple distinct operations (e.g., a scan laser configuration formed sipe and a fixed laser configuration sipe are formed) are performed without adjusting the article relative to the part holder. Alternative system may rely on reloading the part to transition between a fixed laser configuration and a scan laser configuration. As such, the contemplated aspects increase efficiency by limiting the loading and re-loading time and energy.

Turning to FIG. 2 illustrating an exemplary relative movement between the laser 104 and the part holder 102 is depicted in accordance with aspects hereof. As shown, the part holder 102 may move in X, Y, and Z axial directions with rotation about those same directions. The laser is also depicted as moving in the Y axis. Therefore, a distance between the laser and the article 106 may be maintained within a set range by moving the laser 104 and/or the part holder 102. Additionally, an exemplary laser energy distribution pattern 203 is depicted. The laser energy distribution pattern 203 may be conical as a result of a moveable reflective surface contained within or relative to the laser 104.

FIG. 3 illustrates another exemplary relative movement between the laser 104 and the part holder 102 in accordance with aspects hereof. The laser 104 in FIG. 3 is depicted as having movement capability in the X, Y, and Z axial directions as well as rotation about those directions as well. As can be appreciated by FIG. 3, it is contemplated that any component may be coupled to any movement mechanisms configuration to achieve a siping pattern on an article, such as the article 106.

FIG. 5 depicts a laser siping operation performed by the laser 104 on a sole 500, in accordance with aspects hereof. While the sole 500 is depicted, it is contemplated that any article may be siped in examples not in accordance with the present invention. The sole 500 may be formed from a foamed material (e.g., ethyl vinyl acetate), a rubber material (e.g., natural or synthetic rubber), an organic material (e.g., leather), or other polymer materials (e.g., nylon, vinyl, polyester). Depending on the size, shape, and material of the article to be siped, the configuration of the laser 104 may be adjusted. For example, the distance, power, angle, speed, number of passes over a common spot, and the like may all be altered to achieve a defined siping configuration (e.g., size, shape, pattern, speed of formation).

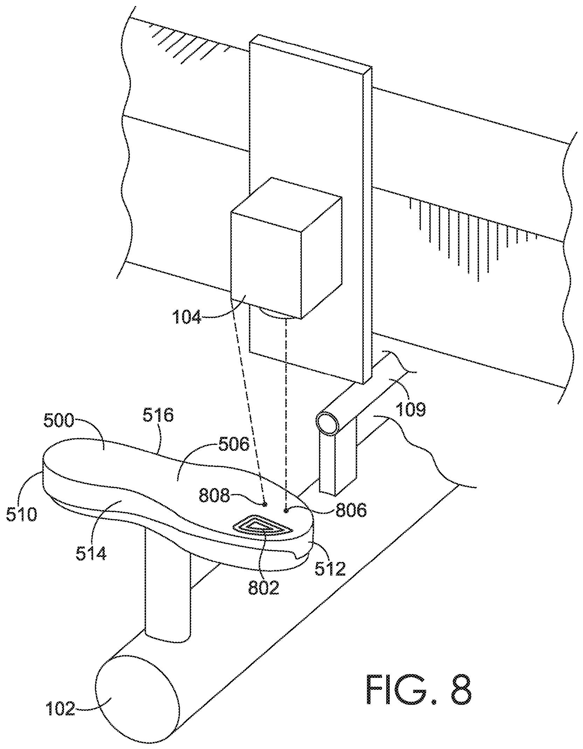

The sole 500 has a ground-contacting surface 506, an opposite foot-contacting surface 508, a toe end 512, a heel end 510, a medial side 514, and a lateral side (not depicted in FIG. 5, but depicted as lateral side 516 in FIG. 8). Depicted on the ground-contacting surface 506, a major surface for this sole 500, is a siping pattern comprised of a first sipe 502 and a second sipe 504. The second sipe 504 is depicted as being formed by the laser 104 emitting the laser beam 202 that is forming the sipe 504. Also depicted in connection with the sipe 504 is a first point 518 and a second point 520. In this example, the first point 518 and the second point 520 are two points that depict maximum distance of a continuous sipe. The distance across the ground-contacting surface 506 may be less than a defined distance, such as 150 millimeters in an exemplary aspect, when using the scan laser configuration. Therefore, the laser 104 may be acting in a scan laser configuration as the focal length of the laser beam 202 is maintained within a defined range to form the sipe 504. Alternatively, the laser 104 may be operating in a fixed laser configuration having the reflective surface maintained while the laser 104 is moved relative to the sole to form the sipe 504.

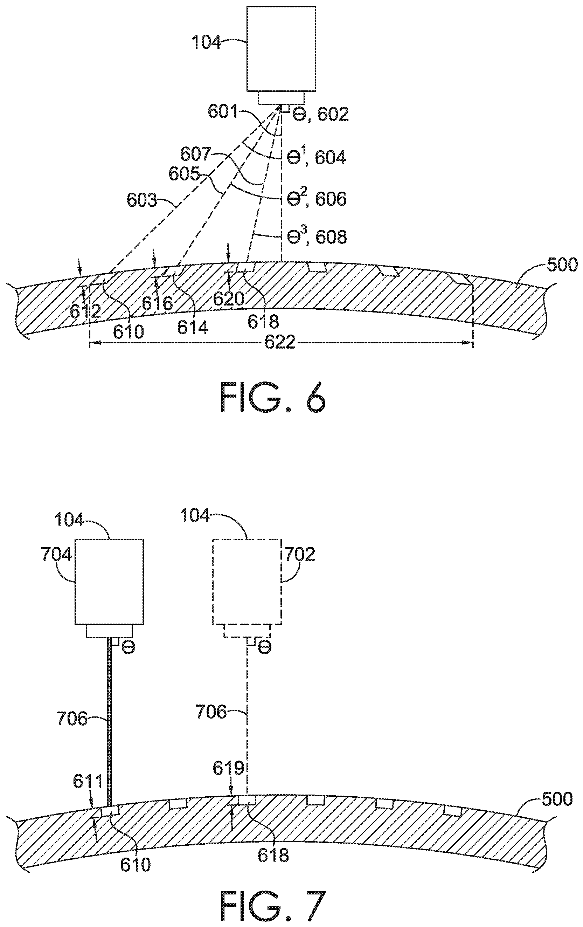

FIG. 6 depicts a cross section of the sole 500 having a plurality of sipes formed therein with the laser 104 operating in the scan laser configuration, in accordance with aspects hereof. A first sipe 610 has a first depth 612 formed by a first beam path 603 (i.e., laser energy beam path) at an angle 604. A second sipe 614 has a second depth 616 formed by a second beam path 605 at an angle 606. A third sipe 618 has a third depth 620 formed by a third beam path 607 at an angle 608. The angles 604, 606, and 608 are measured relative to a perpendicular 602 line extending from the laser 104.

It is contemplated that the first depth 612 is less than the second depth 616 that is less than the third depth 620, in an exemplary aspect. The varied depth may be a factor of the beam length. For example, the longer a beam length, the less a depth formed for a sipe, within an aspect. For example, the first beam path 603 is longer than the second beam path 605, and the second beam path 605 is longer than the third beam path 607. However, it is contemplated that the beam length may be compensated for by reducing travel speed as the beam length grows, by increasing a number of laser energy beam passes across a point, and/or adjusting a power output of the laser 104.

Also depicted, a shape of the sipe may change based on the beam angle. For example, the sidewalls of the first sipe 610 angle to correspond with the first beam path 603. The third sipe 618 has a different shape profile as a result of the different beam angle of the third beam path 607. Therefore, a siping pattern may include adjustments to the cross sectional profile by adjusting a beam angle relative to the article. This may be implemented to achieve undercuts or other angles that provide functional differences, such as an increase in flexibility or directional direction.

Additionally, it is contemplated that the implementation of a scan laser configuration may be limited by a distance from the laser the beam is allowed to extend. As such, a distance 622 extending between distal points of a continuous siping pattern (e.g., distance 622 may extend between a circular sipe formed by first sipe 610) may be used to determine if the intended sipe pattern is suitable to be formed by a scan laser configuration. In an exemplary aspect, the distance 622 is less than 150 millimeters for a siping pattern that uses a scan laser configuration. However, it is contemplated that the distance may be lesser or greater than 150 millimeters. For example, the power, dwell time, number of passes, and the like may be adjusted to achieve a sipe for distances greater than 150 millimeters using the scan laser configuration.

FIG. 7 depicts a cross section of the sole 500 having a plurality of sipes formed therein with the laser 104 operating in the fixed laser configuration, in accordance with aspects hereof. The laser 104 is depicted as transitioning from a first orientation 702 to a second orientation 704 causing a laser energy beam 706 to form the third sipe 618 having a depth 619 in the first orientation 702 and forming the first sipe 610 having a depth 611 in the second orientation 704. As a distance between the laser 104 and the sole 500 may be maintained consistent in this example, the depth 619 and the depth 611 may be substantially consistent. Further, it is contemplated that the laser energy beam 706 extends perpendicularly from the laser 104.

FIG. 8 depicts a perspective view of the laser siping apparatus of FIG. 1 operating in a scan laser configuration, in accordance with aspects hereof. The laser 104 emits laser energy toward the part holder 102 having maintained thereon the sole 500 from FIG. 5. The laser 104 and the part holder 102 are maintained in a fixed relative location when forming a siping pattern in this example. The reflective surface of the laser 104 is moved to direct a laser energy beam in a defined pattern to form the laser siping pattern, as will be depicted in FIG. 9 hereinafter.

A first calibration light source within the laser 104 produces a visible light 806 and a second calibration light source forms a visible light 808. It is contemplated that the second calibration light source is mounted at a first degree, such as 45 degrees, relative to a beam direction of the first calibration light source. The visible light 806 and 808 converge on a common point of the sole 500 when a focal length (e.g., 200 millimeters, 300 millimeters, 400 millimeters, etc.) of the laser 104 is achieved between the laser 104 and the sole 500. Therefore, the calibration light sources may provide a visual confirmation as to the calibration, alignment, and movement mechanism positioning as to the laser energy path and position. As the laser energy may be emitted in the infrared spectrum and not easily visible to a human observer, the calibration light sources may provide visual confirmation.

Also depicted is an exemplary inlet 109 coupled with the part holder 102. The inlet 109 may be connected with an exhaust system to evacuate particulate generated from the siping process. By coupling the inlet in a fixed potion relative to the sole 500, even when performing a fixed laser configuration siping operation, the inlet is maintained within a defined vicinity of the sole 500.

FIG. 9 depicts a perspective view of the laser siping apparatus of FIG. 8 operating in a scan laser configuration, in accordance with aspects hereof. A siping pattern 802 previously formed is depicted. A second siping pattern 804 is being formed by the laser 104 operating in a scan laser configuration. The laser beam 202 is reflected to form the second siping pattern 804 while the laser 104 and the part holder 102 are maintained in a fixed position. Stated differently, the second siping pattern 804 may be formed without the laser 104 or the part holder 102 moving, in this exemplary aspect.

The siping pattern 802 is discrete from the siping pattern 804. As such, when determining that a scan laser configuration is appropriate for the major surface of sole 500, the discrete siping patterns that do not share common continuous sipes of the pattern may be evaluated to determine if the sipes to be formed can be formed within the focal length range of the laser 104. Therefore, even though two discrete siping patterns may collectively be outside a range of coverage for a scan laser configuration, it is contemplated that a first discrete siping pattern may be formed from a scan laser configuration and a second discrete may subsequently be formed from a scan laser configuration, in exemplary aspects.

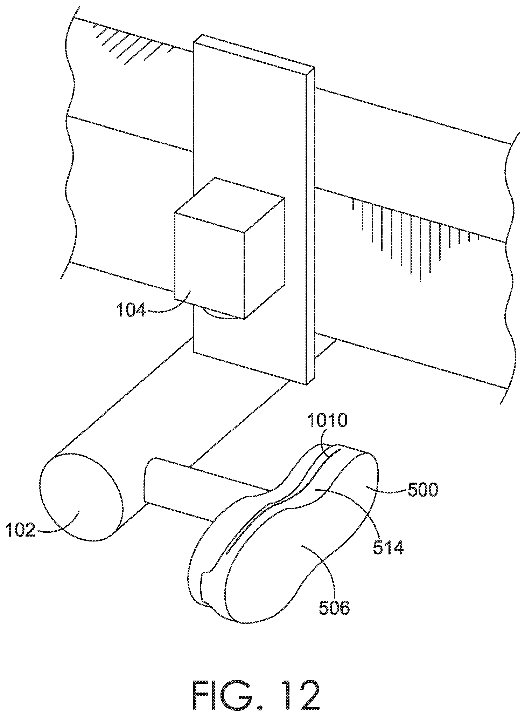

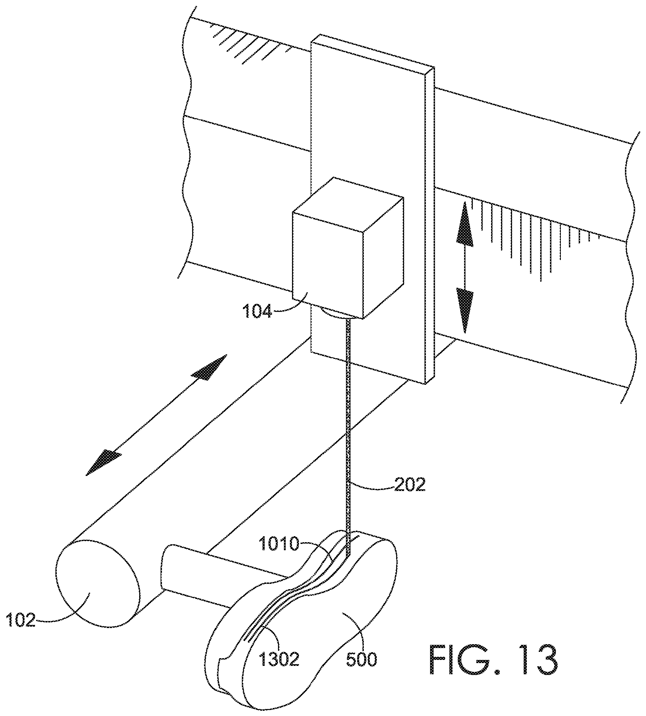

As compared to later discussed FIG. 12 showing a second orientation and FIG. 13 showing a third orientation, FIG. 9 depicts a first orientation of the part holder 102 relative to the laser 104.

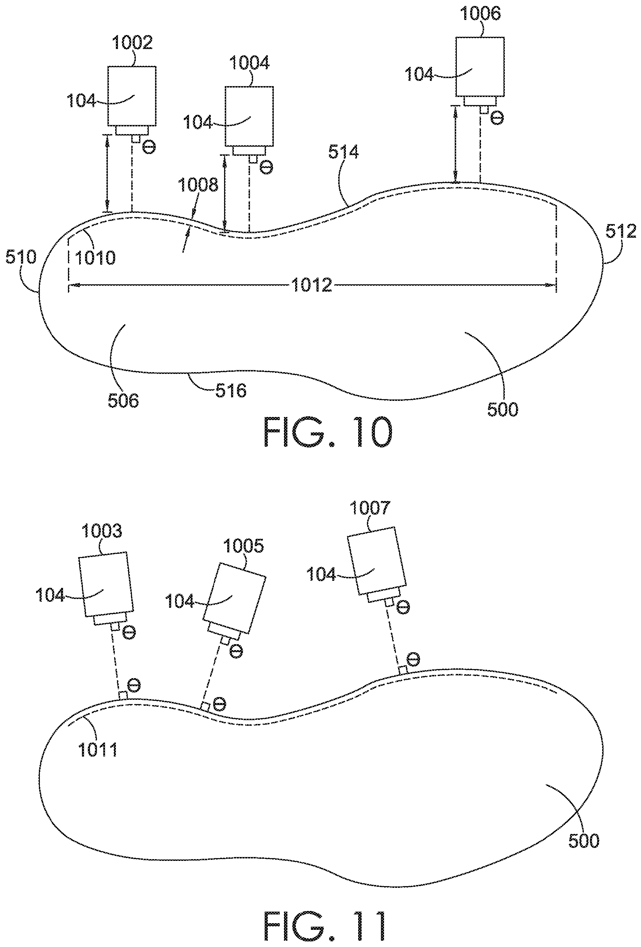

Turning to FIG. 10 depicting a fixed laser configuration of the laser 104 generating a sipe 1010 along the sole 500 medial 514 sidewall, in accordance with an example not according to the present invention.

The laser 104 is shown in three orientations relative to the sole 500. The first orientation 1002 is proximate the heel end 510, a second orientation 1004 is proximate a concave portion of the medial 514 side, and a third orientation 1006 proximate the toe end 512. It is understood that the sole 500 and/or the laser 104 move by one or more movement mechanisms as previously described to allow for the transition from the different orientations of relative positioning. For example, the sole 500 may be affixed to a part holder (e.g., part holder 102 of FIG. 1) that moves the sole 500 in relation to the laser 104. Alternatively or additionally the laser 104 may be affixed to one or more movement mechanisms that move the laser 104 in relation to the sole 500. Additionally, it is contemplated that one direction of movement (e.g., a toe end to heel end direction) is performed by one element (e.g., part holder 102 of FIG. 1) and a second direction of movement (e.g., vertical direction that is in the medial to lateral direction of the sole 500 as oriented in FIG. 10) is performed by the laser 104 to achieve a level of control. The various movements are controlled by the controller to ensure a defined sipe pattern is formed.

In FIG. 10, the sipe 1010 extends a constant depth 1008 along the medial 514 side of the sole 500. The constant depth 1008 may be achieved by maintaining a consistent distance between the laser 104 and the medial 514 side as the laser 104 transitions through the various orientations. As previously discussed, a consistent distance between the laser 104 and an article may be achieved by moving the laser 104 and/or the article as the contours of the article change.

The sipe 1010 is depicted in FIG. 10 having a continuous length of 1010. As the length 1012 may exceed a defined useable range of the laser 104 in a scan laser configuration, the sipe 1010 may be formed in the fixed laser configuration as depicted in FIG. 10. For example, the length 1012 may exceed 150 millimeters, in an exemplary aspect. It is contemplated that for a sipe having a final continuous length greater than 150 millimeters, a series of scan laser configuration operations may be performed to provide a final continuous sipe length that exceeds a useable range traditionally. For example, a first portion of a sipe pattern may be formed with a scan laser configuration and then a second portion may be formed with the scan laser configuration after the laser and/or part reposition relative to each other. This serial approach may be implemented in some examples.

While the fixed laser configuration of FIG. 10 depicts a medial 514 sidewall having a sipe formed thereon, it is contemplated that the fixed laser configuration may be implemented for the toe end 512, the heel end 510, the ground-contacting surface, and the foot-contacting surface. Further, while the figures depict a sole article for an article of footwear, it is contemplated that any article may be used in the laser siping apparatus provided herein. For example, clothing, outerwear, tires, electronics, automotive, marine, aviation components, and the like.

FIG. 11 depicts a fixed laser configuration of the laser 104 generating a sipe 1011 along a sole medial sidewall, in accordance with the present invention.

As compared to FIG. 10 provided before, the laser 104 is depicted as having multiple orientations that maintains a perpendicular laser beam intersection with the sole 500. For example, the laser 104 emits the laser energy at a 90 degree angle to a laser traverse axis and is oriented such that the laser beam intersects the sole 500 surface at a perpendicular orientation when forming the sipe 1011. At a first orientation 1003, the laser 104 is proximate the heel end and oriented to intersect the sole 500 in a perpendicular manner. At a second orientation 1005, the laser 104 is oriented for the laser beam to intersect the sole 500 in a perpendicular manner even with the concave surface structure. At a third orientation 1007, the laser 104 maintains a perpendicular intersection with the sole 500 even with the convex surface structure. Therefore, as the laser 104 traverses the sole 500 forming the sipe 1011, the laser 104 (or the sole 500) is moved to maintain the perpendicular intersection. A perpendicular intersection may be effective to provide a specified functional characteristic of the sipe. While a perpendicular intersection is discussed, it is contemplated that any angle from any axis may be implemented using in conformance with the aspects provided herein.

FIG. 12 depicts a perspective view of the sole 500 maintained by the part holder 102 oriented (e.g., a second orientation as compared to the first orientation previously discussed for the scan laser configuration in FIG. 9) relative to the laser 104 to form a sipe on the exterior sidewall of the sole on the medial side 514 with a fixed laser configuration, in accordance with the present invention.

FIG. 13 depicts the laser 104 forming a sipe 1302 alongside the sipe 1010 using a fixed laser configuration, in accordance with aspects hereof. As depicted, the part holder 102 moves the sole 500 in a first direction that allows the laser beam 202 to traverse the sole 500. The laser 104 is moved in a perpendicular direction to maintain the laser beam 202 within a defined focal distance from the sole 500. As previously provided, it is contemplated that the part holder 102 may move in any degree of (not in accordance with the present invention) and the laser 104 may move in any degree of motion to accomplish the fixed laser configuration (in accordance with the present invention). Regardless of the portions placed in relative movement, the fixed laser configuration depicted in FIG. 13 shows the laser beam 202 traversing the sole 500 from an initial orientation at the start of the sipe 1302 to a subsequent orientation where the laser beam 202 intersects the sole 500.

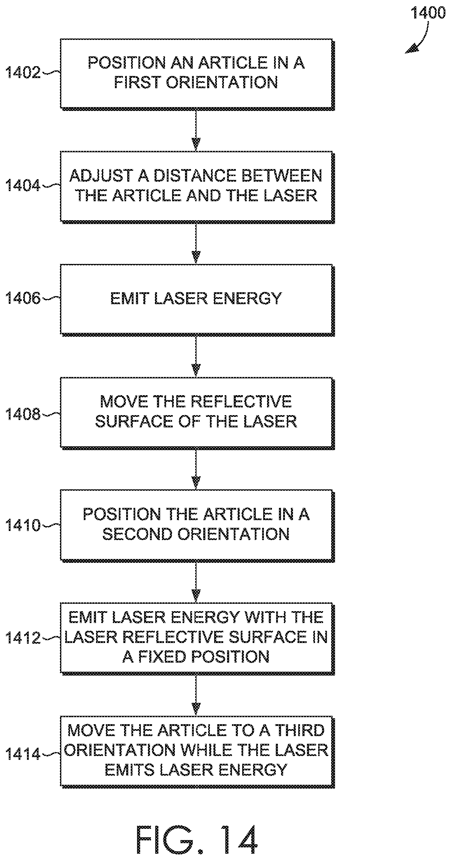

FIG. 14 depicts a block diagram 1400 representing a method of laser siping a sole structure for an article of footwear, in accordance with aspects hereof. At a first block 1402, an article is positioned in a first orientation. As previously discussed, it is contemplated that the article may be a component used in footwear, such as a sole or an upper (or a discrete portion thereof). As also contemplated herein, the article may incorporated in apparel, equipment, or the like. In an exemplary aspect, the article is a foam-based (e.g., ethyl-vinyl acetate) sole component for an article of footwear (e.g., shoe, sandal, boot, cleat).

The article may be positioned by one or more movement mechanisms controlling a part holder to which the article is removably attached. Additionally, it is contemplated that the positioning of the article into the first orientation may be accomplished by moving, with one or more movement mechanisms, a laser relative to the article. As also contemplated and discussed herein, positioning the article in a first orientation may be achieved by moving a combination of the part holder maintaining the article as well as the laser, in exemplary aspects.

The first orientation is a relative positioning of the article to a laser that will perform a laser siping operation. Therefore, it is contemplated that a specific portion of the article is positioned relative to a laser for a particular siping pattern to be formed on the article. In an exemplary aspect, a major surface of the article is oriented relative to the laser. As provided herein, a major surface is a surface of the article having a greater surface area than other surfaces of the article. For example, if the article is a footwear sole, a major surface include a foot-contacting surface (e.g., a surface intended to be directed toward a foot when in a worn configuration, but it is understood that intervening materials and layers may separate the foot from the foot-contacting surface) and/or a ground-contacting surface (e.g., a surface intended to be directed toward the ground when in a worn configuration, but it is understood that intervening materials and layers may separate the ground from the ground-contacting surface). To the contrary, a minor surface of an article is a surface having a lesser amount of surface area than a major surface. For example, if the article is a footwear sole, a minor surface includes the sidewalls extending between the foot-contacting surface and the ground-contacting surface. The side walls may extend on the medial, lateral, toe, and/or heel regions of the sole. The sidewalls may extend away (e.g., upwards) from the foot-contacting surface and the ground-contacting surface to form a cup-like sole structure. Therefore, the side walls may have an exterior and an interior surface, in some aspects.

At a block 1404, a distance is adjusted between the article and the laser. The adjustment of the distance is in response to a calibration of the focal distance of the laser. For example, as provided herein, it is contemplated that visible light may form a first calibration light and a second calibration light. The first calibration light may be directed in a common pathway that laser energy will be emitted, giving a visual indication as to the laser energy path. The second calibration light may emanate from a source having a known offset angle (e.g., 30-60 degrees), such as 45 degrees. The second calibration light source may also be offset horizontally from the first calibration light source a known or fixed distance. Therefore, with a known angle and a known offset distance, when the first and second calibration lights converge on the article, a visual indication of a defined distance between the article and the laser can be verified. This defined distance between the article and the laser may correspond with the focal length of the laser or a focal length range for the laser, in an exemplary aspect. Therefore, in block 1404, the laser (and/or the part holder) may adjust the distance there between until the first and second calibration lights converge, representing a defined distance between the laser and the article.

At a block 1406, laser energy is emitted from a laser emitter of the laser towards the article. The laser energy may be a beam of infrared electromagnetic energy produced by a CO2 laser, in an exemplary aspect. The laser energy (e.g., laser beam) is emitted from the laser emitter (e.g., generator of laser energy) and is reflected from a moveable reflective surface, such as a mirror. The reflective surface may be mechanically coupled to one or more movement mechanisms that are capable of changing a reflection angle, position, or orientation of the laser energy. This change in the reflective surface is useable to direct the laser energy at defined points on the article to form a laser siping pattern when the reflective surface is dynamically moved while reflecting laser energy, as depicted at block 1408.

The moving of the reflective surface may be controlled by a computing device that provides instructions to the one or more movement mechanisms. For example, the computing device may have a coordinates and position information for forming a defined siping pattern on a known article configuration. That information allows for a series of instructions to be provided to the movement mechanism controlling the movement of the reflective surface to effectively form the predefined siping pattern on the article using a scan laser configuration, in an exemplary aspect.

As previously provided herein, the scan laser configuration may operate the laser in a range that is greater than the laser focal length. For example, it is contemplated that as the reflective surface reflects the laser energy, the angle of reflection increases a distance the laser energy travels prior to intersecting the article. This increased distance may cause the laser to form a sipe portion even when the laser energy is beyond the focal length. As such, a useable focal length range may be provided for a laser. The focal length range may be a 33% range, in an exemplary aspect. For example, if the focal length of a laser is 300 millimeters, the focal length range for the laser may be 200-400 millimeters, in an example. Therefore, it is contemplated that a laser siping pattern to be formed by a continuous scan laser configuration may be limited in size to a siping pattern that is able to be formed while maintaining the laser energy within the defined focal length range, in an exemplary aspect.

At a block 1410, the article is positioned in a second orientation relative to the laser. As with the first orientation positioning, the part holder and/or the laser may move to achieve the second orientation. In an exemplary aspect, the second orientation presents a minor surface of the article to the laser for purposes of forming a sipe by way of a fixed laser configuration. For example, when the article is a sole, the second orientation may present a sidewall of the sole for a sipe to be formed thereon.

The positioning of the article in an orientation may be performed by one or more movement mechanisms controlling the position of the laser and/or the part holder. It is contemplated that a computing device is logically coupled with the movement mechanisms to provide instructions that control the position and timing of the movement. These instructions may synchronize and coordinate the movement of multiple elements to allow for the unified creation of a siping pattern on the article, in an exemplary aspect. Therefore, the computer-controlled movement mechanisms may be responsive to instructions from the computing device to orient one or more elements of the system to facilitate formation of a siping pattern.

At a block 1412, laser energy is emitted from the laser, which may be the same laser or a different laser than the laser of block 1406. The laser energy reflects from the reflective surface, which is maintained in a fixed position in this step, toward the article. The laser energy is as caused to form a continuous sipe by moving the article to a third orientation while the laser emits laser energy, as depicted in block 1414. The third orientation is achieved by movement of the laser. In an exemplary aspect, the movement from the second orientation to the third orientation allows for a fixed laser configuration to form a siping pattern on a minor surface, such as a sole side wall, of the article.

During the movement of block 1414, it is contemplated that a constant (e.g., a substantially constant) distance is maintained between the laser and the article to ensure a defined focal length is substantially maintained. It is contemplated that angles of intersection and distance from the article may be maintained or adjusted during the forming of a sipe pattern by either the fixed laser configuration, the scan laser configuration, and/or the hybrid laser configuration.

While specific elements and steps are discussed in connection to one another, it is understood that any element and/or steps provided herein is contemplated as being combinable with any other elements and/or steps regardless of explicit provision of the same while still being within the scope of the invention as defined by the appended claims.

## Claims

1. A laser siping apparatus (100) for laser siping a sole structure (500) for an article of footwear, comprising:
a laser (104), the laser (104) comprising a laser energy emitter (402) and a programmable moveable reflection surface (404) between the laser energy emitter (402) and an output port (406) of the laser (104);
a movement mechanism (118, 120) physically coupled with the laser (104) and logically coupled with a computing device (112), wherein the movement mechanism (118, 120) is functional to move the laser (104) in one or more axis of motion in response to instructions from the computing device (112),
a part holder (102), the part holder (102) is programmably moveable and has maintained thereon the sole structure (500);
the computing device (112) being coupled with the laser (104) and the part holder (102), the computing device (112) having non-transitory computer readable media having instructions stored thereon for controlling the laser (104) and the part holder (102), the instructions comprising:
positioning the part holder (102) in a first orientation relative to the laser (104);
while the part holder (102) is in the first orientation, moving the reflection surface (404) and directing the laser energy to a first plurality of points relative to the part holder (102) maintained in the first orientation, such that the laser energy is positioned at different angles (604, 606, 608) relative to a perpendicular line (602) extending from the laser (104) to create first sipes (610, 614, 617) having first depths (612, 616, 620) in the sole structure (500), respectively, and the laser (104) is maintained a constant distance relative to a part held by the part holder (102),
positioning the part holder (102) in a second orientation relative to the laser (104),
while the part holder (102) is in the second orientation, moving the laser (104) while the laser energy emitter (402) emits laser energy, the laser energy directed to a second plurality of points relative to the part holder (102) maintained in the second orientation, such that the laser energy is positioned orthogonally to the second plurality of points to create a second sipe having a second depth, and the laser (104) is maintained the constant distance relative to the part held by the part holder (102);
positioning the part holder (102) in a third orientation relative to the laser;
while the part holder (102) is in the third orientation, moving the laser while the laser energy emitter emits laser energy, the laser energy is directed to a third plurality of points relative to the part holder (102) maintained in the third orientation, such that the laser energy is positioned orthogonally to the third plurality of points to create a third sipe having a third depth, and the laser (104) is maintained the constant distance relative to the part held by the part holder (102).

2. The laser siping apparatus (100) of claim 1 further comprising a movement mechanism (118, 120) physically coupled with the laser (104) and logically coupled with the computing device (112), wherein the movement mechanism (118, 120) is functional to move the laser (104) in one or more axis of motion in response to instructions from the computing device (112),
wherein the constant distance is maintained by the movement mechanism (118, 120) moving the laser (104).

3. The laser siping apparatus (100) of claim 1 wherein the laser emitter (402) is a carbon dioxide (CO2) laser and/or
wherein the laser emitter (402) emits a beam of infrared light as the laser energy.

4. The laser siping apparatus (100) of claim 1 further comprising a chilling device (110) the chilling device functionally coupled with the laser (104) to thermally regulate the laser (104) and/or
further comprising a frame structure (114), the laser (104) directly or indirectly physically coupled with the frame structure (114).

5. The laser siping apparatus (100) of claim 1 further comprising a first calibration light source, the first calibration light source emits visible spectrum light through the output port (406) after reflecting from the moveable reflection surface (404).

6. The laser siping apparatus (100) of claim 5 further comprising a second calibration light source, the second calibration light source converges with the first calibration light source at a specified distance from the output port (406),
wherein preferably the specified distance is between 200 millimeters and 400 millimeters.

7. The laser siping apparatus (100) of claim 1 further comprising an exhaust system (108) having an inlet physically coupled with the part holder (102).

8. The laser siping apparatus (100) of claim 1 wherein transitioning from the second orientation to the third orientation causes the laser (104) to traverse at least 150 millimeters relative to the part holder (102).

9. The laser siping apparatus (100) of claim 1, wherein when the part holder (102) is maintained in the first orientation, a distance between any two points of the plurality of points is less than 150 millimeters.

10. A method of laser siping an article (106), the method comprising:
position the article (106) in a first orientation relative to a laser (104); emitting laser energy from a laser emitter (402) of a laser (104) towards the article (106), wherein a computer-controlled moveable reflection surface (404) reflects the laser energy from the laser emitter (402) towards the article (106);
while the article (106) is in the first orientation relative to the laser (104), moving the reflection surface (404) and directing the laser energy to a first plurality of points relative to the part holder (102) maintained in the first orientation, such that the laser energy is positioned at different angles (604, 606, 608) relative to a perpendicular line (602) extending from the laser (104) such that first sipes (610, 614, 617) having first depths (612, 616, 620) are created on the article (106), respectively, by the movement of the reflection surface (404) reflecting laser energy, and the laser (104) is maintained a constant distance from the article (106);
positioning the article (106) in a second orientation relative to the laser (104);
while the article (106) is in the second orientation relative to the laser (104), moving the laser as the laser emitter (402) emits laser energy towards the article (106) and orthogonally positioning the laser energy to a second plurality of points such that a second sipe having a second depth is created on the article (106), and the laser (104) is maintained the constant distance from the article (106);
positioning the article (106) in a third orientation relative to the laser (104);, and
while the article (106) is in the third orientation relative to the laser (104), moving the laser as the laser emitter (402) emits laser energy towards the article (106) and orthogonally positioning the laser energy to a third plurality of points such that a third sipe having a third depth is created on the article (106). and the laser (104) is maintained a constant distance from the article (106),
wherein the article (106) is a footwear sole structure (500).

11. The method of claim 10, wherein any two points of the plurality of points in the first orientation are less than 150 millimeters apart.

12. The method of claim 11, wherein two points in the second orientation are at least 150 millimeters apart.

13. The method of claim 10 wherein the laser (104) is maintained a predefined distance from the article (106) when the article (106) moves from the second orientation to the third orientation.

14. The method of claim 10 wherein positioning the article (106) in a second orientation is comprised of moving the laser (104) and/or moving the article (106).

15. The method of claim 10, the method comprising:
adjusting a distance between the sole structure (500) and the laser (104) to achieve a predefined focal distance between the laser (104) and the sole structure (500) ground-contacting surface (506).

## Patentansprüche

1. Laser-Lamellierungsvorrichtung (100) zum Laser-Lamellieren einer Sohlenstruktur (500) für einen Schuhwerkartikel, umfassend:
einen Laser (104), wobei der Laser (104) einen Laserenergieemitter (402) und eine programmierbare, bewegliche Reflexionsfläche bzw. -oberfläche (404) zwischen dem Laserenergieemitter (402) und einem Ausgangsanschluss (406) des Lasers (104) umfasst;
einen Bewegungsmechanismus (118, 120), der physisch mit dem Laser (104) gekoppelt ist und logisch mit einer Rechenvorrichtung (112) gekoppelt ist, wobei der Bewegungsmechanismus (118, 120) dahingehend funktional ist bzw. dazu dient, den Laser (104) in einer oder mehreren Bewegungsachsen als Antwort auf Anweisungen von der Rechenvorrichtung (112) zu bewegen;
einen Teilehalter (102), wobei der Teilehalter (102) programmierbar beweglich ist und die Sohlenstruktur (500) darauf hält;
wobei die Rechenvorrichtung (112) mit dem Laser (104) und dem Teilehalter (102) gekoppelt ist, wobei die Rechenvorrichtung (112) nichtflüchtige, computerlesbare Medien mit darauf gespeicherten Anweisungen zum Steuern bzw. Regeln des Lasers (104) und des Teilehalters (102) aufweist, wobei die Anweisungen umfassen:
Positionieren des Teilehalters (102) in einer ersten Ausrichtung relativ zu dem Laser (104);
während sich der Teilehalter (102) in der ersten Ausrichtung befindet, Bewegen der Reflexionsfläche (404) und Richten der Laserenergie auf eine erste Mehrzahl von Punkten relativ zu dem Teilehalter (102), der in der ersten Ausrichtung gehalten ist, sodass die Laserenergie in unterschiedlichen Winkeln (604, 606, 608) relativ zu einer senkrechten Linie (602) positioniert wird, die sich von dem Laser (104) erstreckt, um jeweils erste Lamellierungen (610, 614, 617) mit ersten Tiefen (612, 616, 620) in der Sohlenstruktur (500) zu erzeugen, und der Laser (104) in einem konstanten Abstand relativ zu einem von dem Teilehalter (102) gehaltenen Teil gehalten ist,
Positionieren des Teilehalters (102) in einer zweiten Ausrichtung relativ zu dem Laser (104),
während sich der Teilehalter (102) in der zweiten Ausrichtung befindet, Bewegen des Lasers (104), während der Laserenergieemitter (402) Laserenergie emittiert, wobei die Laserenergie auf eine zweite Mehrzahl von Punkten relativ zu dem Teilehalter (102) gerichtet wird, der in der zweiten Ausrichtung gehalten ist, sodass die Laserenergie orthogonal zu der zweiten Mehrzahl von Punkten positioniert wird, um eine zweite Lamellierung mit einer zweiten Tiefe zu erzeugen, und der Laser (104) in dem konstanten Abstand relativ zu dem von dem Teilehalter (102) gehaltenen Teil gehalten ist;
Positionieren des Teilehalters (102) in einer dritten Ausrichtung relativ zu dem Laser;
während sich der Teilehalter (102) in der dritten Ausrichtung befindet, Bewegen des Lasers, während der Laserenergieemitter Laserenergie emittiert, wobei die Laserenergie auf eine dritte Mehrzahl von Punkten relativ zu dem Teilehalter (102) gerichtet wird, der in der dritten Ausrichtung gehalten ist, sodass die Laserenergie orthogonal zu der dritten Mehrzahl von Punkten positioniert wird, um eine dritte Lamellierung mit einer dritten Tiefe zu erzeugen, und der Laser (104) in dem konstanten Abstand relativ zu dem von dem Teilehalter (102) gehaltenen Teil gehalten ist.

2. Laser-Lamellierungsvorrichtung (100) nach Anspruch 1, ferner umfassend einen Bewegungsmechanismus (118, 120), der physisch mit dem Laser (104) gekoppelt ist und logisch mit der Rechenvorrichtung (112) gekoppelt ist, wobei der Bewegungsmechanismus (118, 120) dahingehend funktional ist, den Laser (104) in einer oder mehreren Bewegungsachsen als Antwort auf Anweisungen von der Rechenvorrichtung (112) zu bewegen,
wobei der konstante Abstand durch den Bewegungsmechanismus (118, 120) beibehalten wird, der den Laser (104) bewegt.

3. Laser-Lamellierungsvorrichtung (100) nach Anspruch 1, wobei der Laseremitter (402) ein Kohlendioxid(CO2)-Laser ist und/oder
wobei der Laseremitter (402) einen Strahl von Infrarotlicht als die Laserenergie emittiert.

4. Laser-Lamellierungsvorrichtung (100) nach Anspruch 1, ferner umfassend eine Kühlvorrichtung (110), wobei die Kühlvorrichtung funktional mit dem Laser (104) gekoppelt ist, um den Laser (104) thermisch zu regulieren, und/oder
ferner umfassend eine Rahmenstruktur (114), wobei der Laser (104) direkt oder indirekt physisch mit der Rahmenstruktur (114) gekoppelt ist.

5. Laser-Lamellierungsvorrichtung (100) nach Anspruch 1, ferner umfassend eine erste Kalibrierungslichtquelle, wobei die erste Kalibrierungslichtquelle nach Reflexion von bzw. an der beweglichen Reflexionsfläche (404) Licht im sichtbaren Spektrum durch den Ausgangsanschluss (406) emittiert.

6. Laser-Lamellierungsvorrichtung (100) nach Anspruch 5, ferner umfassend eine zweite Kalibrierungslichtquelle, wobei die zweite Kalibrierungslichtquelle mit der ersten Kalibrierungslichtquelle in einem spezifizierten Abstand von dem Ausgangsanschluss (406) konvergiert bzw. auf diese trifft,
wobei vorzugweise der spezifizierte Abstand zwischen 200 Millimeter und 400 Millimeter beträgt.

7. Laser-Lamellierungsvorrichtung (100) nach Anspruch 1, ferner umfassend ein Abgassystem (108) mit einem Einlass, der physisch mit dem Teilehalter (102) gekoppelt ist.

8. Laser-Lamellierungsvorrichtung (100) nach Anspruch 1, wobei ein Übergang von der zweiten Ausrichtung zu der dritten Ausrichtung den Laser (104) veranlasst, zumindest 150 Millimeter relativ zu dem Teilehalter (102) zurückzulegen.

9. Laser-Lamellierungsvorrichtung (100) nach Anspruch 1, wobei, wenn der Teilehalter (102) in der ersten Ausrichtung gehalten ist, ein Abstand zwischen zwei beliebigen Punkten der Mehrzahl von Punkten weniger als 150 Millimeter beträgt.

10. Verfahren zum Laser-Lamellieren eines Artikels (106), wobei das Verfahren umfasst:
Positionieren des Artikels (106) in einer ersten Ausrichtung relativ zu einem Laser (104);
Emittieren von Laserenergie von einem Laseremitter (402) eines Lasers (104) zu dem Artikel (106), wobei eine computergesteuerte bzw. -geregelte, bewegliche Reflexionsfläche bzw. -oberfläche (404) die Laserenergie von dem Laseremitter (402) zu dem Artikel (106) reflektiert;
während sich der Artikel (106) in der ersten Ausrichtung relativ zu dem Laser (104) befindet, Bewegen der Reflexionsfläche (404) und Richten der Laserenergie auf eine erste Mehrzahl von Punkten relativ zu dem Teilehalter (102), der in der ersten Ausrichtung gehalten ist, sodass die Laserenergie in unterschiedlichen Winkeln (604, 606, 608) relativ zu einer senkrechten Linie (602) positioniert wird, die sich von dem Laser (104) erstreckt, sodass jeweils erste Lamellierungen (610, 614, 617) mit ersten Tiefen (612, 616, 620) auf dem Artikel (106) durch die Bewegung der Reflexionsfläche (404), die Laserenergie reflektiert, erzeugt werden, und der Laser (104) in einem konstanten Abstand von dem Artikel (106) gehalten wird;
Positionieren des Artikels (106) in einer zweiten Ausrichtung relativ zu dem Laser (104);
während sich der Artikel (106) in der zweiten Ausrichtung relativ zu dem Laser (104) befindet, Bewegen des Lasers, wenn bzw. während der Laseremitter (402) Laserenergie zu dem Artikel (106) emittiert, und orthogonales Positionieren der Laserenergie zu einer zweiten Mehrzahl von Punkten, sodass eine zweite Lamellierung mit einer zweiten Tiefe auf dem Artikel (106) erzeugt wird, und der Laser (104) in dem konstanten Abstand von dem Artikel (106) gehalten wird;
Positionieren des Artikels (106) in einer dritten Ausrichtung relativ zu dem Laser (104); und
während sich der Artikel (106) in der dritten Ausrichtung relativ zu dem Laser (104) befindet, Bewegen des Lasers, wenn bzw. während der Laseremitter (402) Laserenergie zu dem Artikel (106) emittiert, und orthogonales Positionieren der Laserenergie zu einer dritten Mehrzahl von Punkten, sodass eine dritte Lamellierung mit einer dritten Tiefe auf dem Artikel (106) erzeugt wird, und der Laser (104) in einem konstanten Abstand von dem Artikel (106) gehalten wird;
wobei der Artikel (106) eine Schuhsohlenstruktur (500) ist.

11. Verfahren nach Anspruch 10, wobei zwei beliebige Punkte der Mehrzahl von Punkten in der ersten Ausrichtung weniger als 150 Millimeter voneinander entfernt sind.

12. Verfahren nach Anspruch 11, wobei zwei Punkte in der zweiten Ausrichtung zumindest 150 Millimeter voneinander entfernt sind.

13. Verfahren nach Anspruch 10, wobei der Laser (104) in einem vordefinierten Abstand von dem Artikel (106) gehalten wird, wenn sich der Artikel (106) von der zweiten Ausrichtung in die dritte Ausrichtung bewegt.

14. Verfahren nach Anspruch 10, wobei das Positionieren des Artikels (106) in einer zweiten Ausrichtung aus einem Bewegen des Lasers (104) und/oder Bewegen des Artikels (106) besteht.

15. Verfahren nach Anspruch 10, umfassend:
Einstellen eines Abstands zwischen der Sohlenstruktur (500) und dem Laser (104), um einen vordefinierten Fokusabstand bzw. Brennweite zwischen dem Laser (104) und der Bodenkontaktfläche bzw. -oberfläche (506) der Sohlenstruktur (500) zu erreichen.

## Revendications

1. Appareil de lamellisation au laser (100) destiné à lamelliser au laser une structure de semelle (500) pour un article de chaussure, comprenant :
un laser (104), le laser (104) comprenant un émetteur d'énergie laser (402) et une surface de réflexion (404) déplaçable programmable entre l'émetteur d'énergie laser (402) et un port de sortie (406) du laser (104) ;
un mécanisme de déplacement (118, 120) accouplé physiquement au laser (104) et couplé logiquement à un dispositif informatique (112), dans lequel le mécanisme de déplacement (118, 120) sert à déplacer le laser (104) dans un ou plusieurs axes de déplacement en réponse à des instructions à partir du dispositif informatique (112),
un support de pièce (102), le support de pièce (102) peut se déplacer de manière programmable et a maintenu sur celui-ci la structure de semelle (500) ;
le dispositif informatique (112) étant couplé au laser (104) et au support de pièce (102), le dispositif informatique (112) ayant un support lisible par ordinateur non transitoires ayant des instructions stockées sur celui-ci destinées à commander le laser (104) et le support de pièce (102), les instructions comprenant :
le positionnement du support de pièce (102) dans une première orientation par rapport au laser (104) ;
alors que le support de pièce (102) est situé dans la première orientation, le déplacement de la surface de réflexion (404) et la direction de l'énergie laser vers une première pluralité de points par rapport au support de pièce (102) maintenu dans la première orientation, de telle sorte que l'énergie laser soit positionnée selon des angles différents (604, 606, 608) par rapport à une ligne perpendiculaire (602) s'étendant à partir du laser (104) pour créer de premières lamelles (610, 614, 617) ayant des premières profondeurs (612, 616, 620) dans la structure de semelle (500), respectivement, et que le laser (104) soit maintenu à une distance constante par rapport à une pièce retenue par le support de pièce (102),
le positionnement du support de pièce (102) dans une deuxième orientation par rapport au laser (104),
alors que le support de pièce (102) est située dans la deuxième orientation, le déplacement du laser (104) pendant que l'émetteur d'énergie laser (402) émet une énergie laser, l'énergie laser étant dirigée vers une deuxième pluralité de points par rapport au support de pièce (102) maintenue dans la deuxième orientation, de telle sorte que l'énergie laser soit positionnée orthogonalement à la deuxième pluralité de points pour créer une deuxième lamelle ayant une deuxième profondeur, et que le laser (104) soit maintenu à la distance constante par rapport à la pièce retenue par le support de pièce (102) ;
le positionnement du support de pièce (102) dans une troisième orientation par rapport au laser ;
alors que le support de pièce (102) est située dans la troisième orientation, le déplacement du laser pendant que l'émetteur d'énergie laser émet une énergie laser, l'énergie laser est dirigée vers une troisième pluralité de points par rapport au support de pièce (102) maintenue dans la troisième orientation, de telle sorte que l'énergie laser soit positionnée orthogonalement à la troisième pluralité de points pour créer une troisième lamelle ayant une troisième profondeur, et que le laser (104) soit maintenu à la distance constante par rapport à la pièce retenue par le support de pièce (102).

2. Appareil de lamellisation au laser (100) selon la revendication 1, comprenant en outre un mécanisme de déplacement (118, 120) accouplé physiquement au laser (104) et couplé logiquement au dispositif informatique (112), dans lequel le mécanisme de déplacement (118, 120) sert à déplacer le laser (104) dans un ou plusieurs axes de déplacement en réponse à des instructions à partir du dispositif informatique (112),
dans lequel la distance constante est maintenue par le mécanisme de déplacement (118, 120) déplaçant le laser (104).

3. Appareil de lamellisation au laser (100) selon la revendication 1, dans lequel l'émetteur laser (402) est un laser au dioxyde de carbone (CO2) et/ou
dans lequel l'émetteur laser (402) émet un faisceau de lumière infrarouge en tant qu'énergie laser.

4. Appareil de lamellisation au laser (100) selon la revendication 1, comprenant en outre un dispositif de refroidissement (110), le dispositif de refroidissement étant couplé de manière opérationnelle au laser (104) pour réguler thermiquement le laser (104) et/ou
comprenant en outre une structure de cadre (114), le laser (104) étant directement ou indirectement accouplé physiquement à la structure de cadre (114).

5. Appareil de lamellisation au laser (100) selon la revendication 1, comprenant en outre une première source de lumière d'étalonnage, la première source de lumière d'étalonnage émet une lumière de spectre visible à travers le port de sortie (406) après réflexion à partir de la surface de réflexion (404) déplaçable.

6. Appareil de lamellisation au laser (100) selon la revendication 5, comprenant en outre une seconde source de lumière d'étalonnage, la seconde source de lumière d'étalonnage converge avec la première source de lumière d'étalonnage à une distance spécifiée par rapport au port de sortie (406),
dans lequel, de préférence, la distance spécifiée est comprise entre 200 millimètres et 400 millimètres.

7. Appareil de lamellisation au laser (100) selon la revendication 1, comprenant en outre un système d'échappement (108) ayant une entrée accouplée physiquement au support de pièce (102).

8. Appareil de lamellisation au laser (100) selon la revendication 1, dans lequel le passage de la deuxième orientation à la troisième orientation amène le laser (104) à parcourir au moins 150 millimètres par rapport au support de pièce (102).

9. Appareil de lamellisation au laser (100) selon la revendication 1, dans lequel, lorsque le support de pièce (102) est maintenu dans la première orientation, une distance entre deux points quelconques de la pluralité de points est inférieure à 150 millimètres.

10. Procédé destiné à lamelliser au laser un article (106), le procédé comprenant :
le positionnement de l'article (106) dans une première orientation par rapport à un laser (104) ; l'émission d'énergie laser à partir d'un émetteur laser (402) d'un laser (104) vers l'article (106), dans lequel une surface de réflexion (404) déplaçable commandée par ordinateur réfléchit l'énergie laser à partir de l'émetteur laser (402) vers l'article (106) ;
alors que l'article (106) est situé dans la première orientation par rapport au laser (104), le déplacement de la surface de réflexion (404) et la direction de l'énergie laser vers une première pluralité de points par rapport au support de pièce (102) maintenu dans la première orientation, de telle sorte que l'énergie laser soit positionnée selon des angles différents (604, 606, 608) par rapport à une ligne perpendiculaire (602) s'étendant à partir du laser (104) de telle sorte que des premières lamelles (610, 614, 617) ayant des premières
profondeurs (612, 616, 620) soient créées sur l'article (106), respectivement, par le déplacement de la surface de réflexion (404) réfléchissant une énergie laser, et que le laser (104) soit maintenu à une distance constante par rapport à l'article (106) ;
le positionnement de l'article (106) dans une deuxième orientation par rapport au laser (104) ;
alors que l'article (106) est situé dans la deuxième orientation par rapport au laser (104), le déplacement du laser lorsque l'émetteur de laser (402) émet une énergie laser vers l'article (106) et le positionnement orthogonal de l'énergie laser à une deuxième pluralité de points de telle sorte qu'une deuxième lamelle ayant une deuxième profondeur soit créée sur l'article (106), et que le laser (104) soit maintenu à la distance constante par rapport à l'article (106) ;
le positionnement de l'article (106) dans une troisième orientation par rapport au laser (104) ;, et
alors que l'article (106) est situé dans la troisième orientation par rapport au laser (104), le déplacement du laser lorsque l'émetteur de laser (402) émet une énergie laser vers l'article (106) et le positionnement orthogonal de l'énergie laser à une troisième pluralité de points de telle sorte qu'une troisième lamelle ayant une troisième profondeur soit créée sur l'article (106) et que le laser (104) soit maintenu à une distance constante par rapport à l'article (106),
dans lequel l'article (106) est une structure de semelle (500) de chaussure.

11. Procédé selon la revendication 10, dans lequel deux points quelconques de la pluralité de points dans la première orientation sont espacés de moins de 150 millimètres.

12. Procédé selon la revendication 11, dans lequel deux points dans la deuxième orientation sont espacés d'au moins 150 millimètres.

13. Procédé selon la revendication 10, dans lequel le laser (104) est maintenu à une distance prédéfinie par rapport à l'article (106) lorsque l'article (106) se déplace de la deuxième orientation vers la troisième orientation.

14. Procédé selon la revendication 10, dans lequel le positionnement de l'article (106) dans une deuxième orientation comprend le déplacement du laser (104) et/ou le déplacement de l'article (106).

15. Procédé selon la revendication 10, le procédé comprenant :
l'ajustement d'une distance entre la structure de semelle (500) et le laser (104) afin d'obtenir une distance focale prédéfinie entre le laser (104) et la surface de contact avec le sol (506) de structure de semelle (500).
